# EUROPEAN PATENT APPLICATION

(11) **EP 4 711 870 A1**
(43) Date of publication of application: **18.03.2026**
(21) Application number: 24200670.8
(22) Date of filing: 16.09.2024
(51) Int. Cl.: G05B 19/408

(54) **CONVERTING MACHINE CONTROL DATA FOR PROTOTYPING**

(71) Applicant: Sika Technology AG, 6340 Baar (CH)
(72) Inventor: GARANDEL, Léa, 8048 Zürich (CH); LOOTENS, Didier, 8048 Zürich (CH)
(74) Representative: Sika Patent Attorneys

(57) **Abstract**

A computer implemented method Computer implemented method (1) for generating modified machine control data for a 3D printer to produce a prototype (400) of a planned three-dimensional object (500) with a printing material, particularly a prototype having a reduced dimensions compared to the original dimensions of the planned three dimensional object (500), whereby initial machine control data (200) suitable for producing the planned three-dimensional object (500) is modified based on a defined scaling factor (210), and optionally defined prototype printing parameters (211), in order to obtain modified machine control data (200') that is suitable for 3D printing the prototype (400) of the planned three dimensional object (500) with the given scaling factor (210).

## Description

### Technical field

The invention relates to a computer implemented method for generating modified machine control data for a 3D printer to produce a prototype of a planned three-dimensional object with a printing material. Further aspects of the invention are directed to a method for producing a prototype of a planned three-dimensional object with a 3D printer, and a method for producing the three-dimensional object with a 3D printer. Also, the invention is directed to a system with a data processing unit and a 3D printer comprising means for carrying out said methods as well as to a corresponding computer program .

### Background art

The production of shaped bodies by additive manufacturing methods is becoming increasingly important in all fields of technology. The term "additive manufacturing method" or "additive manufacturing" refers to methods in which a three-dimensional object or a shaped body is produced by selective three-dimensional deposition, application and/or solidification of material. Additive manufacturing methods are also referred to using terms such as "generative manufacturing methods", "additive manufacturing" or "3D printing".

In this process, the deposition, application and/or solidification of the material takes place in particular based on a data model of the object to be produced. In the additive manufacturing method, each object is typically produced from one or a plurality of sheets. Ordinarily, an object is manufactured using a shapeless material (e.g. liquids, powders, granules, etc.) and/or a shape-neutral material (e.g. bands, wires) that in particular is subjected to chemical and/or physical processes (e.g. melting, polymerization, sintering or curing).

In the construction field, efforts have been under way for some time to produce and geometrically sophisticated components such as e.g. mortar or concrete elements, e.g. walls, pillars, or floors, by means of 3D printing. The physical and chemical properties of concrete mixtures, however, make the generative production of 3D objects made of concrete difficult.

WO 2018/115166 A1 (Sika Technology AG) describes for example a method for producing a shaped body from a curable material, in particular from a mineral binder composition, wherein the curable material is applied layer by layer in an additive method, in particular in an additive free-space method, by a printing head that can be moved in at least one spatial direction and wherein an application rate of the curable material and the temporal development of strength of the curable material are coordinated with each other.

Nowadays, more and more large 3D printers such as robot arms or gantry systems exists on the market to 3D print furniture, construction elements and other types of "large" objects compared to more common small-scale printers that are smaller (usually less than 30 cm in x-, y-, and z-dimensions), cheaper and more accessible to non-professional users. Those large 3D printers use overall more material due to the size of printed elements and the high flow rate. During testing, or in case of wrong design or slicing, the impact of waste quantities is more important than on small-scale 3D printers.

An important step in 3D printing is the conversion of the data model of the object to be produced into machine control data for the 3D printer. This is usually done with so-called "slicers", i.e. special computer programs capable of converting data models directly into the machine control data required for 3D printing. An example of such a program is "Slic3r" (https://slic3r.org). However, such data conversions are complex and computationally intensive.

Currently, there are no reliable methods to test machine control data prior to printing in large scale. If, for example, there is a syntax error in the machine control data, or the three-dimensional object to be printed cannot stand stably due to a misaligned center of gravity, the printing process may fail. In the worst case, this may result in an overall collapse of the printed object and damage of the printing equipment.

There is therefore a continuing need for new and improved solutions that overcome the above-mentioned drawbacks to the extent possible.

### Disclosure of the invention

The object of the present invention is therefore to provide improved solutions for 3D printing of three-dimensional objects. In particular, the solutions should allow for a secure, fast and/or resource-efficient production of such three-dimensional objects, especially large objects.

Surprisingly, it has been found that the object according to the invention can be achieved by a method according to claim 1. Specifically, the core of the present invention is related to a computer implemented method for generating modified machine control data for a 3D printer to produce a prototype of a planned three-dimensional object with a printing material, particularly a prototype having a reduced dimensions compared to the original dimensions of the planned three dimensional object. Thereby, a data model of the planned three-dimensional object to be produced is converted to initial machine control data for 3D printing the planned three-dimensional object with original dimensions. Subsequently, the initial machine control data is modified based on a desired scaling factor, and optionally defined prototype printing parameters, in order to obtain modified machine control data that is suitable for 3D printing of a prototype of the planned three dimensional object with the given scaling factor.

In particular, the method converts large-scale 3D printing commands, i.e. initial machine control data, as an input and provides a scaled version of the same machine control data ready to be printed on a smaller printer with less and/or different printing material. Thus, instead of scaling the data model of the planned three-dimensional object to be printed to a smaller scale and then generating new machine control data, the machine control data for printing the planned three-dimensional in real size is scaled down.

This is highly advantageous because the toolpath, apart from the scaling, remains the same, irrespective whether the object is printed in real size on a large printer or as a prototype in reduced size on a smaller printer. Furthermore, printing parameters, such as e.g. print line width and height can be scaled accordingly so that the result of the small-scale print is as similar as possible with the large-scale print. Also, the inventive approach is as realistic as possible because it is not simply a dry run of the printing head but a real prototype can be produced by discharging printing material.

Furthermore, since modified machine control data is obtained directly from the initial machine control data, the overall process is more resource-efficient and less time consuming when compared to slicing a scaled down data model of the three-dimensional object once again.

Overall, the inventive approach allows for testing and verifying machine control data or printability, respectively, before actually printing an object in real size in a highly efficient and reliable manner. Especially, using the method can save time and reduce material waste from large scale testing.

In particular, any issues with respect to collapse, irregularities and/or start and stop positions for material flow can be checked. Also, it is possible to check that dimensions of the object produced fit in case of assembly of different elements, to avoid time and material waste in case of mistake or error in the slicing. In addition, it is possible to validate a design, showcase or exhibit projects, test and assess lifting points and/or handling processes.

Additional aspects of the invention are subject of further independent claims. Particularly preferred embodiments are outlined throughout the description and the dependent claims.

### Ways of carrying out the invention

A first aspect of the present invention is directed to a computer implemented method for generating modified machine control data for a 3D printer to produce a prototype of a planned three-dimensional object with a printing material, particularly a prototype having a reduced dimensions compared to the original dimensions of the planned three dimensional object, the method comprising the steps of:
a) Providing a three-dimensional data model of the planned three-dimensional object;
b) Defining initial printing parameters including an initial 3D print line height and width;
c) Conversion of the data model of the planned three-dimensional object provided in step a) to initial machine control data for 3D printing the planned three dimensional object with original dimensions, comprising defining a print path, and optionally further initial original printing parameters, required for producing the planned three-dimensional object with the defined initial print line height and width;
d) Defining a scaling factor of the prototype, wherein the scaling factor represents a ratio between a dimension of the prototype and the corresponding original dimension of the planned three dimensional object;
e) Optionally defining prototype printing parameters for printing the prototype, in particular a prototype position offset and/or a rotation of the prototype;
f) Modifying the initial machine control data obtained in step c) based on the defined scaling factor, and optionally the prototype printing parameters defined in step e), in order to obtain modified machine control data that is suitable for 3D printing of the prototype of the planned three dimensional object with the given scaling factor; and
g) Providing the modified machine control data obtained in step f), particularly in the form of a file.

The planned three-dimensional object can be of virtually any desired form, for example it may be a finished part for a structure, e.g. for a building, a masonry structure and/or a bridge. Especially the planned three-dimensional object is a wall, a pillar or a floor of a building.

Especially, a length, width and/or height of the planned three-dimensional object is in the range of 0.5 - 100 m, especially 1 - 50 m, in particular 2 - 40 m or 5 - 25 m.

In particular, step a) take place in a 3D CAD software module or environment. Such software modules or environments are known per se and commercially available.

Especially, the three-dimensional data model of the planned three-dimensional object is a solid model. In contrast to wire-frame models or surface models, solid models represent the whole volume of an object, including the inner structure.

In general, the print line width in particular is meant to be a width of a line printed with the 3D printer. The width is measured in a direction perpendicular to the longitudinal axis of the line. Likewise, the print line height in particular is meant to be a height of a line printed with the 3D printer, which is measured in a direction perpendicular to the longitudinal axis of the line and perpendicular to the print line width.

The print line width and/or height may be controlled by the flow rate of the printing material, the printing speed of the extrusion head of the 3D printer and/or the size of an adjustable exit nozzle. Thereby, controlling of the print line width and/or height in particular is based on a predefined relationship between the print line width and/or height and the flow rate of the printing material, the printing speed of the extrusion head of the 3D printer and/or the size of an adjustable exit nozzle.

Especially, in step b), the initial printing parameters further comprise further initial printing parameters, especially the flow rate of the printing material, the printing speed, temperature of an extrusion head of the 3D printer and/or a composition of the printing material. Especially, the further initial printing parameters comprise the flow rate of the printing material and/or the printing speed.

In particular, step c) takes place in a slicer software module or environment. Such software modules or environments are known per se and commercially available.

Especially, in step c) the data model of the planned three-dimensional object is divided in a stack of two-dimensional layers and these layers are represented by commands defining the print path, which are included into the machine control data, optionally with the further printing parameters, required for producing the planned three-dimensional object. Such operations can be performed in standard slicer software modules or environments.

The initial machine control data and/or the modified machine control data preferably is represented by numerical control (NC) programming code, especially by G-code, in particular in line with ISO 6983-1 :2009-12. Machine control data provided in this manner can directly be used with ordinary 3D printers. However, for special applications, other data formats are suitable as well.

In particular, the initial machine control data comprises the print path in the form of a sequence of coordinates, especially spatial coordinates, the printer for producing the three dimensional object is intended to follow during the printing process, in particular to produce print lines.

In step d) a scaling factor of the prototype is defined. Especially, the scaling factor is a ratio between a length, width and/or height of the prototype and the corresponding length, width and/or height of the planned three-dimensional object. Preferably, the scaling factor is the same for all dimensions. This ensures that the prototype is similar in shape with the three-dimensional object. Similar in shape means that angles and distance ratios match in the objects under consideration.

In particular, the scaling factor is < 1, in particular, < 0.5, especially < 0.1, for example < 0.05 or < 0.01. This means that the prototype is smaller, in particular considerably smaller, than the three-dimensional object.

In optional step e), prototype printing parameters for printing the prototype may be defined. In particular, a prototype position offset and/or rotation of the prototype, is/are defined as a prototype printing parameter in step e). However, it is possible as well to derive any required prototype printing parameter directly from the original machine control data in step f).

In step f), modifying the initial machine control data in particular is effected such that the print path and/or the printing parameters is/are modified. In particular, modifying the initial machine control data is effected such that the print path is modified based on the defined scaling factor and optionally based on the prototype printing parameters defined in step e), in particular the prototype offset and/or the rotation of the prototype.

The prototype offset in particular is meant to be a length displacement in x, y and/or z direction. The rotation of the prototype refers in particular to an angle by which the prototype is rotated about the x, y or z axis. Such adjustments may for example be helpful to compensate for different origin points of the printer(s).

Especially, the modified machine control data comprises the modified print path in the form of a sequence of coordinates, especially spatial coordinates, the printer used for printing the prototype is intended to follow during the printing process, in particular to produce printing lines.

In particular, in step f), the scaling factor is the same for all dimensions and/or the initial machine control data is modified such that the prototype is similar in shape with the planned three dimensional object.

Especially, step f) comprises the following sub-steps:
i) Calculating a modified print line width and height based on the scaling factor and
ii) Calculating a modified print path with 3D print lines having the modified line width and height based on the scaling factor and optionally the prototype position offset and/or the rotation of the prototype.
iii)In step g), providing the modified machine control data can for example be performed via a software interface and/or a hardware interface.

Furthermore, the invention is concerned with a method for producing a prototype of a planned three-dimensional object with a 3D printer, comprising the steps of:
(i) Performing the method as described above;
(ii) Printing the prototype with a 3D printer based on the modified machine control data provided in sub-step g) of step (i).

With this method, the prototype is actually printed based on the modified machine control data.

The method may comprise a further steps of defining further prototype printing parameters, e.g. by a user, especially the printing speed and/or flow rate of the prototype printing material, temperature of an extrusion head of the 3D printer and/or a composition of the prototype printing material. These further steps are preferably conducted before step (ii).

A 3D printer for use in the above described method preferably comprises a print head that is moveable in at least one, especially in all, spatial direction(s) with which printing material can be applied in layers at predetermined sites, and a control unit with which the print head can be controlled based on the machine control data obtained in substep g) of step (i). Such 3D printers are commercially available from different suppliers.

For printing the prototype, in principle, any kind of material known for 3D printing can be used in this process.

Thereby, preferably, the prototype is produced with a shapeless material, e.g. a liquid, a powder, a granule, and/or a shape-neutral material, e.g. a band, a wire, that in particular is subjected to chemical and/or physical processes, e.g. solidification, melting, cooling, polymerization, sintering and/or curing.

Especially, the prototype is printed with a thermoplastic material or a curable material, particularly a mineral binder composition. Thereby, preferably, the thermoplastic material or the curable material is applied in layers by the 3D printer having a print head that is movable in at least one, particularly at least two spatial direction(s).

A "curable material" denotes a material that is typically flowable or liquefiable, and after mixing, for example by adding mixing water, mixing in components, or heating, can undergo a chemical reaction to harden into a solid. For example, the curable material can be reaction resins, mineral binders, mineral binder compositions or mixtures thereof.

Reaction resins are in particular liquid or liquefiable synthetic resins that harden into duromers by polymerization or polyaddition. For example, unsaturated polyester resins, vinyl ester resins, acrylic resins, epoxy resins, polyurethane resins and/or silicone resins can be used.

The term "mineral binder" is to be understood in particular as referring to a binder that undergoes a hydration reaction in the presence of water to form solid hydrates or hydrate phases. This can for example be a hydraulic binder (e.g. cement or hydraulic lime), a latent hydraulic binder (e.g. slag), a pozzolanic binder (e.g. fly ash) or a non-hydraulic binder (e.g. gypsum or calcium lime).

Accordingly, a "mineral binder composition" is a composition comprising at least one mineral binder. In the present case, this comprises in particular the binder, aggregates and optionally one or a plurality of admixtures. Examples of suitable aggregates include rock particles, gravel, sand (in natural and/or processed (e.g. crushed) form) and/or fillers. The mineral binder composition is in particular in the form of a liquid binder composition mixed with mixing water.

A "cementitious binder" or a "cementitious binder composition" is understood herein to refer in particular to a binder or a binder composition with a content of at least 5 wt %, in particular at least 20 wt %, preferably at least 35 wt % and in particular at least 65 wt % of cement clinker. The cement clinker is preferably a Portland cement clinker and/or a calcium sulfoaluminate cement clinker, in particular a Portland cement clinker. In the present context, cement clinker refers in particular to ground cement clinker.

In particular, the mineral binder or the binder composition comprises a hydraulic binder, preferably cement. Particularly preferred is a cement with a cement clinker content of ≥35 wt %, in particular a cement of type CEM I, II, III, IV or V, and preferably cement of type CEM I (according to the standard EN 197-1). A content of the hydraulic binder in the mineral binder as a whole is advantageously at least 5 wt %, in particular at least 20 wt %, preferably at least 35 wt % and in particular at least 65 wt %. According to a further advantageous embodiment, the mineral binder consists to at least 95 wt % of a hydraulic binder, in particular cement clinker.

However, it can also be advantageous if the binder composition contains other binders in addition to or instead of a hydraulic binder. These are in particular latent hydraulic binders and/or pozzolanic binders. Suitable latent hydraulic and/or pozzolanic binders are e.g. slag, foundry sand, fly ash and/or silica fume. The binder composition can also comprise inert substances such as e.g. limestone powder, quartz powder and/or pigments. In an advantageous embodiment, the mineral binder comprises 5-95 wt %, in particular 5-65 wt % and in particular 15-35 wt % of latent hydraulic and/or pozzolanic binders.

Especially preferred, the curable material comprises or consists of a mineral binder composition, especially a cementitious mineral binder composition, for example a mortar or concrete composition.

Highly preferred, the prototype is printed with a thermoplastic material. Especially, the prototype is printed with polylactic acid (PLA), acrylonitrile butadiene styrene (ABS), polyethylene, polypropylene, polyamide, polycarbonate, polyethylene terephthalate glycol (PETG) and/or polyether ether ketone (PEEK). However, other plastic materials may be used as well.

A still further aspect of the present invention is directed to a method for producing a three-dimensional object with a 3D printer, comprising the steps of:
(A) Producing a prototype of a planned three-dimensional object with a 3D printer with a method for producing a prototype of a planned three-dimensional object with a 3D printer as described above;
(B) Identifying possible defects in the prototype obtained in step (A);
(C) In case defects are identified in step (B) or these are above a predefined threshold, repeating step (A) and (B) whereby in step (A) substeps (i) a) to c) an adjusted data model of the three-dimensional object and/or adjusted initial printing parameters and/or adjusted initial further printing parameters is/are used to provide an optimized version of the initial machine control data; whereby step (C) is repeated until the prototype obtained in step (B) does not show any defects or these are below a predefined threshold;
(D) Printing the three-dimensional object based on the latest version of the original machine control data obtained in substep (i) c) of step (A).

With this method, the planned three-dimensional object is actually printed.

Thereby, in particular, step (A) comprises the following substeps:
(i) Performing the steps:
   a) Providing the three-dimensional data model of the planned three-dimensional object;
   b) Defining the initial printing parameters including a 3D print line height and width;
   c) Conversion of the data model of the planned three-dimensional object provided in step a) to initial machine control data for 3D printing the three planned dimensional object with original dimensions, comprising defining a print path, and optionally further initial printing parameters, required for producing the planned three-dimensional object with the defined initial print line height and width;
   d) Defining a scaling factor of the prototype, wherein the scaling factor represents a ratio between a dimension of the prototype and the corresponding original dimension of the planned three dimensional object;
   e) Optionally defining prototype printing parameters for printing the prototype, in particular a prototype position offset and/or a rotation of the prototype;
   f) Modifying the initial machine control data obtained in step c) based on the defined scaling factor, and optionally based on the prototype printing parameters defined in step e), in order to obtain modified machine control data that is suitable for 3D printing of the prototype of the three dimensional object with the given scaling factor; and
   g) Providing the modified machine control data obtained in step f), particularly in the form of a file
(ii) Printing the prototype with a 3D printer based on the modified machine control data provided in sub-step g) of step (i).

Step A) may comprise a further steps of defining further prototype printing parameters, e.g. by a user, especially the printing speed and/or flow rate of the prototype printing material, temperature of an extrusion head of the 3D printer and/or a composition of the prototype printing material. These further steps are preferably conducted before step (ii).

Defects that can be identified in step (B) are for example deviations with respect to the data model of the planned three-dimensional, e.g. shape deviations, length deviations, angle deviations, fissures, sections with insufficient quantities of material, and/or collapsed sections.

Identification of defects can be performed manually, e.g. visually, and/or automatically. For automatically identifying defects, the shape and/or surface of the prototype can for example be scanned with a camera, especially a 3D camera, converted to a data model of the scanned prototype, which then ca be compared with the three-dimensional data model of the three-dimensional object.

Preferably, a first 3D printer is used in step (A) and a second 3D printer different from the first printer is used in step (D).

Especially, a working field if the first printer is smaller than a working field of the second printer. For example, a ratio of the working field of the first printer to the working filed of the second printer is < 0.5, especially < 0.1, for example < 0.05 or < 0.01.

In particular, the first printer is a printer with a working field in x, y and/or z direction of around 50 - 350 mm. A working field of the second printer in x, y and/or z direction is for example 0.5 - 100 m, especially 1 - 50 m, in particular 2 - 40 m or 5-25 m.

Especially, the prototype is produced in step (A) with a thermoplastic material or a curable material, particularly a thermoplastic material, using the first 3D printer and the three-dimensional object is produced in step (B) with a curable material, particularly a mineral binder composition, using the second 3D printer.

According to a special embodiment, the prototype is produced in step (A) with a printing material that is different from the printing material used for printing the three-dimensional object is produced in step (B).

In another embodiment, the prototype in step (A) and the three-dimensional object is produced in step (B) are produced with the same printing material.

The three-dimensional object produced with the method according to the invention can be of virtually any desired form, for example it may be a finished part for a structure, e.g. for a building, a masonry structure and/or a bridge. Especially the three-dimensional object produced with the method according to the invention is a wall, a pillar or a floor of a building.

Especially, the three-dimensional object produced comprises or consists of a mineral binder composition, especially a cementitious mineral binder composition, for example a mortar or concrete composition.

A further aspect of the preset invention is directed to a data processing system, especially a computer system, comprising means for carrying out one or more of the above-described method. The data processing system can be a single computer system or a distributed computer system.

Another aspect of the invention is related to a computer program comprising instructions which, when the program is executed by a computer, cause the computer to carry out one or more of the above-described methods.

Another aspect of the present invention is directed to a system comprising at least one data processing unit and at least one 3D printer comprising means for carrying out the method for producing a three-dimensional object with a three-dimensional surface structure on at least one surface of the three-dimensional object as described above.

Especially, the system comprises two different 3D printers, in particular as described above. Preferably, there are two different data processing units, each configured to control one of the two different printers. In particular, there is common data processing unit capable of controlling both of the 3D printers.

Further advantageous implementations of the invention are evident from the exemplary embodiments.

### Brief description of drawings

The drawings used to explain the exemplary embodiments show:
- Fig. 1: a flow chart illustrating a computer implemented method according to the invention;
- Fig. 2: an exemplary illustration of the method of Fig. 1 when producing a prototype and of a cuboid three-dimensional object as well as the cuboid three-dimensional object as such.

### Exemplary embodiments

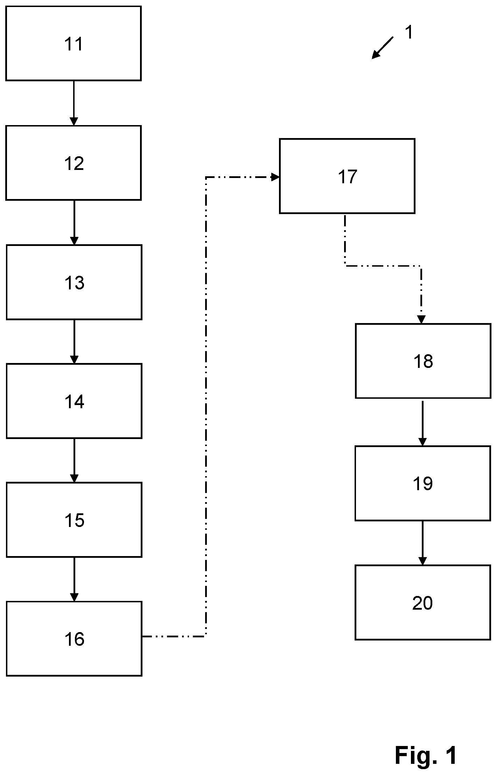

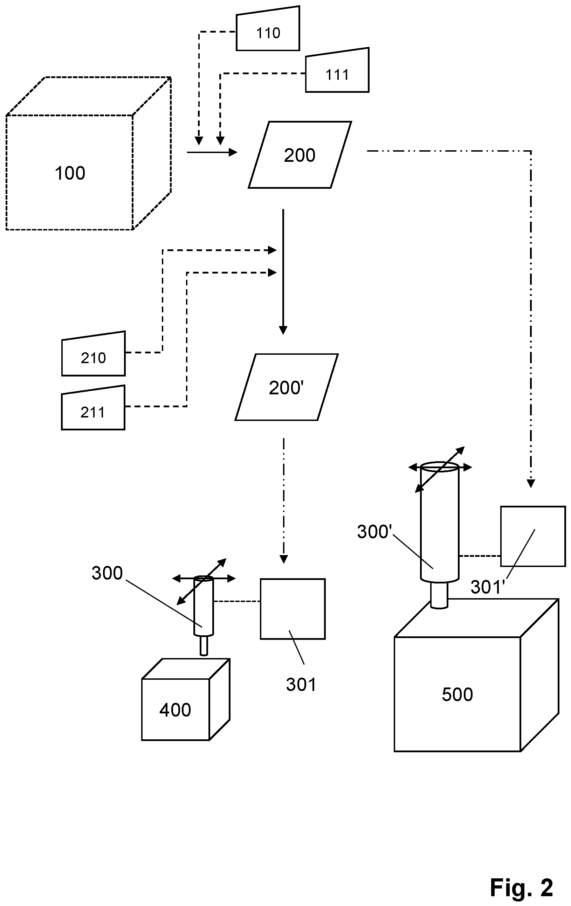

Fig 1. shows a flow chart illustrating the computer implemented method 1 according to the invention. Fig. 2 shows an exemplary illustration of the method of Fig. 1 when producing a cuboid three-dimensional object.

In a first step 11, which is performed for example in a CAD environment, a three-dimensional data model 100 of the planned three-dimensional object 500 to be produced is provided. This is for example a solid model of a cuboid body as shown by dashed lines in Fig. 2.

Subsequently, in a second step 12, initial printing parameters 110, i.e. the initial print line height and width, are defined, e.g. by a user. Also, further initial printing parameters 111 comprising the printing speed and flow rates of the print material are defined.

In the third step 13, the data model 100 of the three-dimensional object provided in the first step 11 is converted to initial machine control data 200 for the 3D printer defining a print path of the 3D printer and printing parameters of the 3D printer required for producing the cuboid object. This is done with a slicer software module. The printing parameters include for example the print path in the form of coordinates, a printing speed and a flow rate of the print material. For example, the initial machine control data 200 is provided in the form of a G-code file.

Next, in the fourth step 14, a scaling factor 210 of the prototype and prototype printing parameters 211, e.g. a prototype position offset and/or a rotation of the prototype, are defined, for example by a user.

With the fifth step 15, the initial machine control data 200 obtained in step is modified based on the defined scaling factor 210, and optionally the defined prototype printing parameters 211, in order to obtain modified machine control data 200' that is suitable for 3D printing the prototype 400 of the planned three dimensional object 500 with the given scaling factor.

In the sixth step 16, the modified machine control data 200' are provided, for example in the form of a G-code file.

Subsequently, in the optional seventh step 17, the modified machine control data 200' can be sent to a control unit 301 of a prototype 3D printer 300, which produces a real world prototype cuboid object 400, e.g. form a thermoplastic material. The prototype cuboid object 400 is similar in shape with the model 100 of the planned three-dimensional object but it has a smaller size.

In the eight step 18, the possible defects in the prototype 400 are identified by identifying deviations with respect to the data model 100 of the planned three-dimensional 500, e.g. shape deviations, length deviations, angle deviations, fissures, sections with insufficient quantities of material, and/or collapsed sections.

In case defects are identified in step 18 or these are above a predefined threshold, steps 11 to 17 are repeated in step 19, whereby in steps 11 to 13 an adjusted data model 100 of the planned three-dimensional object 500 and/or adjusted initial printing parameters 110 and/or adjusted further initial printing parameters 111 is/are used to provide an optimized version of the initial machine control data 200. Step 19 is repeated until the prototype obtained in step 17 does not show any defects or these are below a predefined threshold.

After step 17 or steps 18 and 19 (if performed), in the tenth step 20, the three-dimensional object 500 is produced based on the latest version of the initial machine control data 200 with a second 3D printer 300'. Especially, a working field if the prototype 3D printer 300 is smaller than a working field of the second 3D printer 300'. Thereby, the latest version of the initial machine control data 200 is sent to a control unit 301' of the second 3D printer 300', which produces a real world cuboid object 500, e.g. from a mineral binder composition.

It will be appreciated by those skilled in the art that the present invention can be implemented in other specific forms without departing from the spirit or essential characteristics thereof. The presently disclosed implementations and embodiments are therefore considered in all respects to be illustrative and not restricted.

## Claims

1. Computer implemented method (1) for generating modified machine control data for a 3D printer to produce a prototype (400) of a planned three-dimensional object (500) with a printing material, particularly a prototype having a reduced dimensions compared to the original dimensions of the planned three dimensional object, the method comprising the steps of:
a) Providing (11) a three-dimensional data model (100) of the planned three-dimensional object (500);
b) Defining (12) initial printing parameters (110) including an initial print line height and width;
c) Conversion (13) of the data model (100) of the planned three-dimensional object (500) provided in step a) to initial machine control data (200) for 3D printing the planned three dimensional object (500) with original dimensions, comprising defining a print path, and optionally further initial printing parameters (111), required for producing the planned three-dimensional object (500) with the defined initial print line height and width;
d) Defining (14) a scaling factor (210) of the prototype, wherein the scaling factor represents a ratio between a dimension of the prototype (400) and the corresponding original dimension of the planned three dimensional object (500);
e) Optionally defining prototype printing parameters (211) for printing the prototype, in particular a prototype position offset and/or a rotation of the prototype;
f) Modifying (15) the initial machine control data (200) obtained in step c) based on the defined scaling factor (210), and optionally based on the prototype printing parameters (211) defined in step e), in order to obtain modified machine control data (200') that is suitable for 3D printing the prototype (400) of the planned three dimensional object (500) with the given scaling factor (210); and
g) Providing (16) the modified machine control data (200') obtained in step f), particularly in the form of a file.

2. Computer implemented method according to claim 1, wherein in step c) the data model (100) of the planned three-dimensional object (500) is divided in a stack of two-dimensional layers and these layers are represented by commands defining the print path, which are included into the initial machine control data (200), optionally with the further printing parameters (111), required for producing the planned three-dimensional object (500).

3. Computer implemented method according to any one of preceding claims, wherein the initial machine control data (200) comprises the print path in the form of a sequence of coordinates, especially spatial coordinates, the printer follows during the printing process, particularly to produce print lines.

4. Computer implemented method according to any of preceding claims, wherein the further initial printing parameters (111) comprise the flow rate of the printing material and the printing speed.

5. Computer implemented method according to any one of preceding claims, wherein the initial machine control data (200) and/or the modified machine control data (200') is represented by numerical control (NC) programming code, especially by G-code, in particular in line with ISO 6983-1:2009-12.

6. Computer implemented method according to any of preceding claims, wherein in step f) modifying the initial machine control data (200) is effected such that the print path is modified based on the defined scaling factor (210) and optionally the printing parameter (211), in particularly the prototype offset and/or the rotation of the prototype.

7. Computer implemented method according to any of preceding claims, wherein step f) (15) comprises the following sub-steps:
i) Calculating a modified print line width and height based on the scaling factor and
ii) Calculating a modified print path with 3D print lines having the modified line width and height based on the scaling factor and optionally based on the defined prototype printing parameters (211), in particular the prototype position offset and/or the rotation of the prototype.

8. Method for producing a prototype of a planned three-dimensional object with a 3D printer, comprising the steps of:
(i) Performing the method according to any of claims 1 - 7;
(ii) Printing (17) the prototype (400) with a 3D printer (300) based on the modified machine control data (200') provided in sub-step g) of step (i).

9. Method according to claim 8 comprising further step of defining further prototype printing parameters, especially the printing speed and/or flow rate of the prototype printing material, temperature of an extrusion head of the 3D printer and/or a composition of the prototype printing material.

10. Method according to claim 8 or 9, wherein the prototype (400) is produced with a thermoplastic material or a curable material, particularly a mineral binder composition, and wherein the thermoplastic material or the curable material is applied in layers by the 3D printer (300) having a print head that is movable in at least one, particularly at least two spatial direction(s).

11. Method for producing a three-dimensional object (500) with a 3D printer, comprising the steps of:
(A) Producing a prototype (400) of a three-dimensional object with a 3D printer (300) with a method according to any of claims 8 - 10;
(B) Identifying (18) possible defects in the prototype obtained in step (A);
(C) In case defects are identified in step (B) or these are above a predefined threshold, repeating (19) step (A) and (B) whereby in step (A) substeps (i) a) to c) an adjusted data model of the planned three-dimensional object and/or adjusted initial printing parameters and/or adjusted further initial printing parameters is/are used to provide an optimized version of the initial machine control data; whereby step (C) is repeated until the prototype obtained in step (B) does not show any defects or these are below a predefined threshold;
(D) Printing (20) the three-dimensional object (500) based on the latest version of the initial machine control data (200) obtained in substep (i) c) of step (A).

12. Method according to claim 11, wherein a first 3D printer (300) is used in step (A) and a second 3D printer (301') different from the first printer is used in step (D).

13. Method according to claim 12, wherein the prototype (400) is produced in step (A) with a thermoplastic material or a curable material using the first 3D printer (300) and the three-dimensional object (500) is produced in step (D) with a curable material, particularly a mineral binder composition, using the second 3D printer (300').

14. System comprising at least one data processing unit (301, 301') and at least one 3D printer (300, 300'), the system comprising means for carrying out a method of any of claims 8 - 13.

15. A computer program comprising instructions which, when the program is executed by a computer, cause the computer to carry out the method of any of claims 1-13.
